Europäisches Patentamt

European Patent Office

Office européen des brevets

(19)

(11) Veröffentlichungsnummer : **0 505 402 B1**

(12) **EUROPÄISCHE PATENTSCHRIFT**

(45) Veröffentlichungstag der Patentschrift :
25.05.94 Patentblatt 94/21

(51) Int. Cl.⁵ : **G01F 1/66**

(21) Anmeldenummer : 91900225.3

(22) Anmeldetag : 13.12.90

(86) Internationale Anmeldenummer :
PCT/EP90/02179

(87) Internationale Veröffentlichungsnummer :
WO 91/09281 27.06.91 Gazette 91/14

(54) ULTRASCHALL-DURCHFLUSSMESSER.

(30) Priorität : 15.12.89 DE 3941544

(43) Veröffentlichungstag der Anmeldung :
30.09.92 Patentblatt 92/40

(45) Bekanntmachung des Hinweises auf die
Patenterteilung :
25.05.94 Patentblatt 94/21

(84) Benannte Vertragsstaaten :
AT BE CH DE ES FR GB IT LI NL SE

(56) Entgegenhaltungen :
GB-A- 2 146 122

(56) Entgegenhaltungen :
Siemens Forschungs- und Entwicklungsberichte, Band 15, Nr.3, 1986, Springer-Verlag,
(Berlin, DE), A.V. Jena: "Ultraschallsensor für
hochauflösende Durchflussmessung", Seiten
126-134
Patent Abstracts of Japan, Band 10, Nr. 180
(P-471)(2236), 24. Juni 1986 & JP-A-6128821

(73) Patentinhaber : SIEMENS
AKTIENGESELLSCHAFT
Wittelsbacherplatz 2
D-80333 München (DE)

(72) Erfinder : RUSSWURM, Winfried, Dr.
Dechbettenerstrasse 19a
D-8400 Regensburg (DE)

EP 0 505 402 B1

## Beschreibung

Die vorliegende Erfindung bezieht sich auf einen Ultraschall-Durchflußmesser wie er im Oberbegriff des Anspruches 1 angegeben ist.

Die Durchlaufmesser bestehen im wesentlichen aus einem von dem betreffenden Medium durchströmten Rohr, in dessen Rohrinnerem eine akustische Wegstrecke verläuft. Die Beeinflussung des Ultraschalls durch das strömende Medium ist die Meßgröße, aus der z.B. das pro Zeiteinheit durch den Rohrquerschnitt hindurch fließende Volumen an Gas oder Flüssigkeit zu erfassen ist. Solche Durchflußmesser eignen sich z.B. als Gas-Durchflußmesser wie z.B. als Haushalts-Gaszähler.

Die erwähnte akustische Meßstrecke ist zwischen einem akustischen Sendewandler und einem akustischen Empfangswandler ausgebildet. Sendewandler und Empfangswandler sind in an sich bekannterweise an der Seitenwand des durchströmten Rohres angebracht, und zwar derart, daß vom Sendewandler ein akustischer Strahl mit einer Komponente parallel zur Strömungsrichtung ausgerichtet in das Rohrinnere gesandt wird. Schräges Einstrahlen des Ultraschalls ist die weitverbreitete Methode, wobei der Ultraschall an der gegenüberliegenden Wand des Rohres reflektiert wird und z.B. mit drei aufeinanderfolgenden Reflektionen an der Rohrinnenwand einen insgesamt W-förmigen Weg zwischen dem Sendewandler und dem Empfgangswandler ausführt.

Die Auswertung der Beeinflussung des Ultraschalls durch die Strömung erfolgt in der Regel in der Weise, daß die Meßstrecke abwechselnd stromabwärts und stromaufwärts vom Ultraschall durchlaufen wird und der sich aus der Strömungsbeeinflussung ergebende Differenzwert für die beiden Ultraschallmessungen das Auswertesignal ist. Sendewandler und Empfangswandler sind also betriebsmäßig vertauschbar genutzt.

Der erwähnte W-förmige Weg wird gegenüber einem nur V-förmigen Weg deshalb bevorzugt, weil mit vorgegebenem, bezogen auf die Rohrachse, axialem Abstand zwischen Sendewandler und Empfangswandler Vorteile erzielbar sind. Es kann auch ein Ultraschallweg mit anstelle von drei Reflexionen mit noch mehr, insbesondere ungradzahlig vielen, Reflexionen vorgesehen sein. Wesentlich dabei ist, daß sich die Ultraschallwandler nicht direkt "sehen" d.h. daß nicht ohne Reflektion Ultraschall vom jeweiligen Sendewandler zum betreffenden Empfangswandler gelangt.

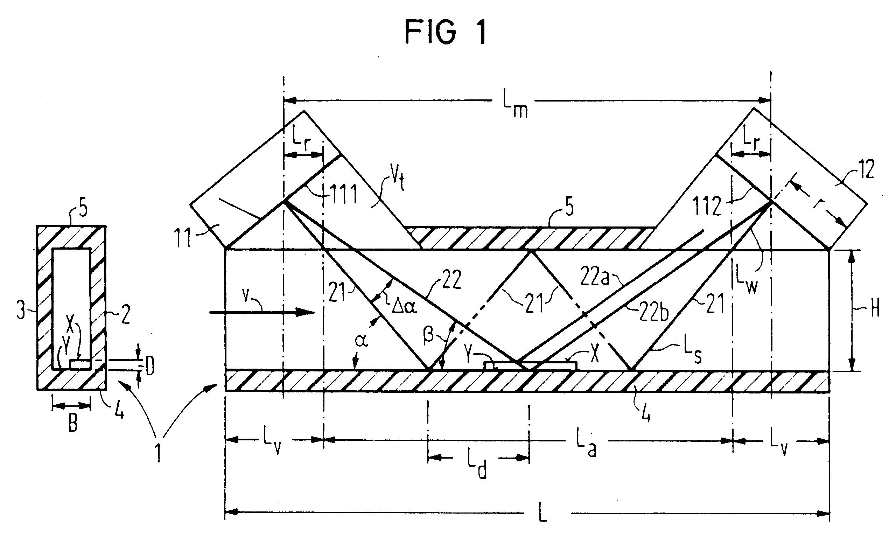

Nutzt man in einer z.B. wie in Fig. 1 dargestellten Anordnung, in der mit 4 und 5 die in der Fig. untere und obere Rohrwand und mit 11 und 12 die Wandler bezeichnet sind, den W-förmigen Ultraschallweg 21, so tritt unvermeidlich auch eine Signalübertragung über den V-förmigen Weg 22 zwischen Sendewandler und Empfangswandler auf. Dies beruht darauf, daß die Strahlungskeulen des Sendewandler und die Empfangskeule des Empfangswandlers nicht beliebig scharf gerichtet sein können.

In den anderen Patentanmeldungen sind Vorschläge zur möglichst weitgehenden Unterdrückung eines parasitären Signals des V-förmigen Weges gegenüber den Nutzsignal des W-förmigen Weges vorgeschlagen. Einmal handelt es sich dabei darum, einen ausgeprägt rechteckigen Rohrquerschnitt zu verwenden, mit einem Verhältnis von Höhe H zu Breite B von größer 2:1 bis 15:1 vorzugsweise 5:1 bis 6:1. Ein solcher Rechteckquerschnitt hat zudem noch den Vorteil homogenisierend auf die Ultraschall-Durchstrahlung des jeweiligen Strömungsquerschnitts einzuwirken. In der anderen Anmeldung ist für ein Meßrohr mit nicht notwendigerweise rechteckförmigem Querschnitt vorgeschlagen, die Wandler 11 und 12 der Fic. 1 in angepaßt modifizierter Weise in einer "Fehlposition" anzuordnen. In Fig. 1 sind die Wandler bezüglich ihres axialen Abstandes voneinander und bezüglich der Winkelausrichtung ihrer abstrahlenden oder Flächen 111 und 112 so angeordnet, daß die Endstrecken des W-förmigen Weges nicht mit der jeweiligen Orthogonalen dieser Flächen 111, 112 zusammenfallen. Die Fehlorientierung besteht darin, den axialen Abstand größer zu bemessen, und/oder die Wandler 11, 12 mit ihren Flächen 111, 112 im Winkel "fehlorientiert", d.h. gekippt, vergleichsweise zur Winkelausrichtung der Wandler der Fig. 1 anzuordnen. Es können auch diese beiden Maßnahmen kombiniert vorgesehen sein.

Aufgabe der vorliegenden Erfindung ist es, eine weitere Maßnahme zur Unterdrückung des Signals des parasitären V-förmigen Weges gegenüber dem Nutzsignal des W-förmigen Weges anzugeben. Insbesondere ist es die Aufgabe, eine möglichst wirksame bis praktisch vollständige Unterdrückung des parasitären Signals zu erreichen.

Diese Aufgabe wird mit den Merkmalen des Anspruches 1 gelöst.

Wie aus der Fig. 1 ersichtlich ist, ist die axiale Position der Reflektionsorte des W-förmigen Weges, und zwar der Reflektionen an der den Wandlern gegenüberliegenden Rohrwand verschieden vom entsprechenden Reflexionsort des V-förmigen Weges.

Man hat bereits den Versuch gemacht, am Ort der Reflexion des V-förmigen Weges an der Rohrinnenwand schalldämmende Einbauten vorzusehen, wie z.B. einen Filzbelag. Eine derartige Maßnahme hat sich aber als für die Strömung nachteilig erwiesen und ließ auch die notwendige Lebensdauer vermissen. Auch war die erreichbare Signalschwächung nur mäßig. Strukturierung der Innenwand des Rohres, nämlich zur Vermeidung gerichteter Reflexion führt auch zu keinem brauchbaren Ergebnis.

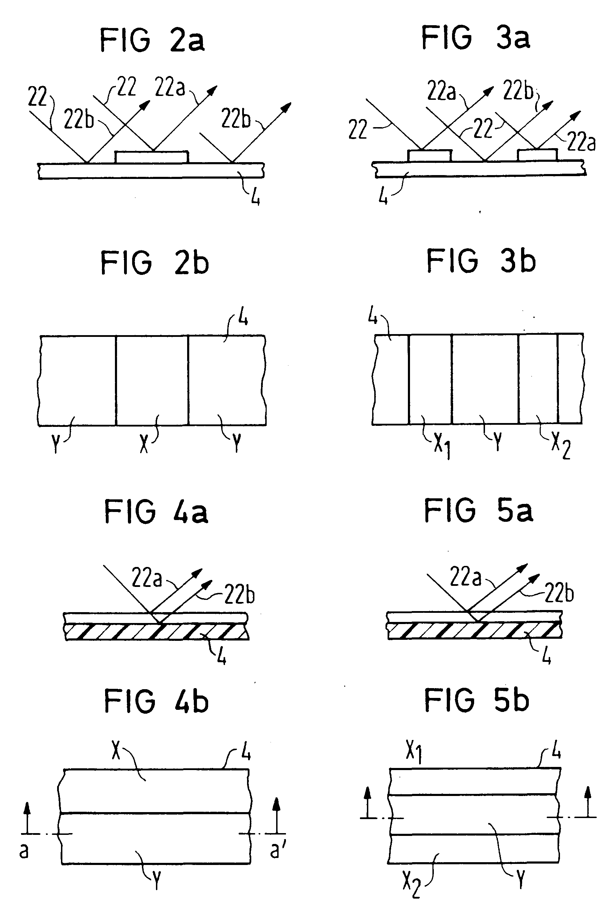

Der Erfindung liegt die Idee zugrunde, mit Hilfe der Interferenz eine weitgehend totale Auslöschung des akustischen Signals des V-förmigen Weges zu erreichen. Es wird erfindungsgemäß an der betreffenden Stelle der Reflexion des V-förmigen Weges ein Einbau im Rohrinneren an der Rohrwand vorgenommen, der die für die Reflexion in Frage kommende Fläche der Rohrinnenwand in wenigstens zwei, vorzugsweise jedoch nur zwei Anteile bzw. Hälften aufteilt. Vorzugsweise bildet die ursprüngliche Rohrinnenwand die eine Hälfte und die andere Hälfte ist die um das Maß D erhöhte Fläche eines Versatzes der Rohrinnenwand. Es kann auch eine entsprechende Vertiefung vorgesehen sein, die aber aufwendiger darzustellen ist. Die Fig. 2, 3, 4 und 5 zeigen Beispiele einer solchen Aufteilung, und zwar die Fig. 2a bis 5a in Draufsicht auf die Innenwand an der Stelle der Reflexion des V-förmigen weges und die Fig. 2b bis 5b die zugehörigen Schnitte a und a'. Aus diesen Darstellungen ist die Bedeutung der Abmessung D zu erkennen, ohne daß dies weiterer Erläuterungen bedarf. In die Fig. 2 bis 5 ist ein Teilstück des V-förmigen Weges 22 eingezeichnet. Für die Flächenanteile X und Y ergeben sich nach Reflexion zwei parallele Ultraschallwege 22a und 22b. Die Dicke wird abhängig vom Winkel β so bemessen, daß diese beiden Wege 22a und 22b in auslöschender Interferenz miteinander sind. Vorzugsweise wird die Interferenz der ersten Ordnung benutzt.

Der Anteil X und/oder Y kann an sich noch einmal flächen- mäßig aufgeteilt sein, wie dies z.B. die Fig. 3 und 5 zeigen. Man kann damit ein noch höheres Maß an zuverlässiger Auslöschung erreichen. Auf jeden Fall gilt die Regel, daß die an dem Flächenanteil X reflektierte Intensität gleich der am Flächenanteil Y reflektierten Intensität sein muß, wobei zu berücksichtigen ist, daß innerhalb der gesamten Reflexionsfläche eine ungleichmäßige Intensitätsverteilung herrscht.

Bei Schallwellenlängen von Lambda ungefähr gleich 2 mm, das entspricht einer Frequenz von 170 Khz in Luft kommt man zu einer Stufenhöhe Dk kleiner / gleich 1 mm bei üblichen Abmessungen für den Winkel Beta. Für die Strömung ist ein derart bemessener Einbau im Rohrinneren unbedeutenc und führt zu höchstens geringfügiger Strömungsstörung. Der Bemessung ist die nachfolgende Erläuterung Interferenz von Schallwellen" zugrunde zu legen.

Interferenz von Schallwellen

Es gilt

$$c = f \times \lambda$$

mit c als Schallgeschwindigkeit im jeweiligen Medium, f als der Wandlerfrequenz und λ als der Wellenlänge im Medium. Zwei Schallwellen gleicher Ausbreitungsrichtung, Frequenz und Amplitude löschen sich aus, wenn sie einen Gangunterschied von

$$= \frac{(2k + 1) x \lambda}{2} \qquad k = 0,1,2...$$

besitzen. Bei senkrechtem Einfall wird dieser Gangunterschied für den Abstand

$$D = \frac{(2k + 1) x \lambda}{4} \qquad k = 0,1,2...$$

der beiden Reflexionsebenen erzielt, also bei k=0 für D= λ/4, Unter Berücksichtigung des im Meßrohr auftretenden Einfalls- winkels β des Signals des V-förmigen Weges errechnet sich die zur Auslöschung erforderliche Höhe D aus

$$D_k = \frac{\sin \beta (2k + 1) \lambda}{4} \qquad k = 0,1,2...$$

bzw. läßt sich unter Berücksichtigung der verschiedenen Medien darstellen als

$$D_k = \frac{\sin \beta (2k + 1) c}{4 f} \qquad k = 0,1,2... \qquad (1)$$

Diese Interferenzerscheinung wird zur Unterdrückung des Signals des V-förmigen Weges benutzt. Dazu kann die Ausbreitungsrichtung für alle beteiligten Schallwellen als nahezu konstant angesehen werden. Zur Vereinfachung wurde in dieser Betrachtung nur die Mittenfrequenz der Wandlerresonanz berücksichtigt. Wegen des großen Impedanzsprungs von Luft zu festen Materialien für Schall ist eine Teilreflexion an der Ober- und Unterseite einer dünnen Schicht nicht möglich (wie beispielsweise in der Optik an dünnen Schichten). Die Wellenfront wird deshalb nicht etwa an einer einheitlich beschichteten Fläche reflektiert, sondern die Reflexionsfläche wird in zwei Bereiche gleichen Flächeninhalts unterteilt, von denen eine Fläche um den Versatz D gegen die andere versetzt ist (Fig. 1) und damit ein Gangunterschied erzeugt wird. Der Phasensprung von λ/2 bei der Reflexion am dichteren Medium tritt hier bei beiden Anteilen auf und braucht deshalb nicht berücksichtigt werden. Der Gangunterschied führt in Richtung zum Empfangswandler zur gegen- seitigen Auslöschung der beiden, an den beiden Teilflächen reflektierten Anteile des Signals des V-förmigen Weges und damit zu dessen wirkungsvoller Unterdrückung.

Diskussion der Anwendung im Meßrohr

Typische Werte für ein hier zu verwendendes Meßrohr sind $L_m$ = 174 mm, r = 7mm und h = 30 mm, sowie α = 35°, damit ergibt sich nach für β = 21,4°. Die Schallgeschwindigkeit in Luft beträgt bei Raumtemperatur c = 340 m/s und in Methan c = 440 m/s. Für Wandler mit r = 7 mm wird in der Praxis eine Radialresonanzfrequenz f ≈ 170 kHz festgestellt. Damit ergibt sich nach für Auslöschung des Signals des V-förmigen Weges die möglichen Erhöhungen $D_K$ in Luft $D_0$ = 0,182 mm, $D_1$ = 0,546 mm, $D_2$ = 0,912 mm, $D_3$ = 1,277 mm und in Methan $D_0$ = 0,236 mm, $D_1$ = 0,708 mm, $D_2$ = 1.180 mm, $D_3$ = 1,652 mm. Für eine gute Unterdrückung in beiden Medien, sowie für alle Schallgeschwindigkeiten im Zwischenbereich kann z. B. D ~ 0,2 mm oder D ~ 0,6 mm gewählt werden. Je nach Erfordernissen läßt sich D auch genau an ein bestimmtes Medium anpassen. Die genannten Werte von D bedeuten einen nur geringfügigen Strömungseinbau. Für Ultra- schallwandler mir r = 10,5 mm und f ~ kHz ist β 23,9°. Damit wird nach (7) in Luft $D_0$ = 0,265 mm, $D_1$ = 0,796 mm, $D_2$ = 1.326 mm, und in Methan $D_0$ = 0,343 mm, $D_1$ = 1.03 mm, $D_2$ = 1.716 mm, sodaß für eine gute Unterdrückung in beiden Medien und im Zwischenbereich z. B. D ~ 0,3 mm oder D ~ 0,9 mm gewählt werden sollte.

Meßbeispiel: Bei β = 21,4° und r = 7 mm, also für Wandler mit f ~ 170 kHz ergibt sich die Länge der Auftreffläche zu 39 mm. Mit einer Stufenhöhe von D = 0,6 mm bei einer Länge von 15 - 20 mm wurden ausgezeichnete Ergebnisse erzielt. Das Signal des V-förmigen Weges läßt sich durch Verwendung der 3 λ/4-Platte (D = 0,6 mm) um etwa 18 dB abschwächen.

### Mögliche Ausführungsformen der erhöhten Fläche

Neben der in Fig. 2 gezeigten Ausführungsform sind noch weitere Variationen der Flächenaufteilung denkbar. in Fig. 2b ist nochmals die in Fig. 2a gezeigte Form dargestellt, bei der die Abfolge nicht erhöht/erhöht/nicht erhöht in Strömungsrichtung erfolgt. Fig. 3 zeigt eine dazu komplimentare Anordnung mit einer Abfolge erhöht/nicht erhöht/erhöht. Ebenso denkbar wären Anordnungen mit einer Abfolge quer zur Strömungsrichtung. Fig. 4 zeigt in diesem Sinne eine Anordnung erhöht/nicht erhöht. Fig. 5 zeigt eine Anordnung erhöht/nicht erhöht/erhöht. Eine Abfolge der verschiedenen Flächen quer zur Strömungsrichtung würde weniger Strömungseinbau bedeuten.

### Patentansprüche

1. Ultraschall-Durchflußmesser mit einem gas-/flüssigkeitsdurchströmtem Messrohr (1) und mit Ultraschall-Sende-/Empfangswandlern (11,12), die für einen "W"-förmigen Ultraschallweg (21) mit im Meßrohr (1) vorgesehenen, mehrfachen Reflexionen plaziert in einem gegebenen Abstand voneinander an ein und derselben Seitenwand (5) des Meßrohrs (1) angebracht sind,
**gekennzeichnet dadurch,**
daß zur Verminderung/Beseitigung des Störsignals eines bekanntermaßen im Meßrohr (1) auftretenden parasitären "V"-förmigen Ultraschallweges
im Rohrinneren an derjenigen Rohrwand (4), die der mit den Wandlern (11,12) versehenen Rohrwand (5) gegenüberliegt und an der eine Reflexion eines V-förmigen Weges auftritt, im Bereich der Reflexion des V-förmigen Weges eine sich über den halben Anteil dieses Reflexionsbereiches erstreckende Erhöhung/Vertiefung der Rohrinnenwand mit einer Stufenhöhe (Dk) vorhanden ist (Fig. 2 bis 5),

wobei die Stufenhöhe (Dk) so bemessen ist, daß für Ultraschallstrahlung des "V"-förmigen Weges auslöschende Interferenz zwischen der am genannten halben Anteil (X) reflektierten Strahlung (22 a) einerseits und der am restlichen halben Anteil (Y) dieses Reflexionsbereiches reflektierten Strahlung (22 b) andererseits vorliegt.

2. Durchflußmesser nach Anspruch 1,
**dadurch gekennzeichnet,**
daß wenigstens einer der halben Anteile (X,Y) des Reflexions bereichs für sich in einzelne Flächenanteile ($X_1,X_2$) aufgeteilt ist (Fig. 3, Fig. 5).

### Claims

1. Ultrasonic flow meter having a measurement tube (1) through which gas/liquid flows and having ultrasonic emission/reception transducers (11, 12), which, for a "W"-shaped ultrasonic path (21) with multiple reflections provided within the measurement tube (1), are fitted so as to be placed at a given spacing from one another at one and the same side wall (5) of the measurement tube (1),
characterized in that
in order to reduce/eliminate the disturbing signal of a parasitic "V"-shaped ultrasonic path which, as is known, occurs within the measurement tube (1)
in the interior of the tube at that tube wall (4) which is opposite the tube wall (5) provided with the transducers (11, 12) and at which a reflection of a V-shaped path occurs, in the region of the reflection of the V-shaped path an elevation/depression, extending over one half component of this reflection region, of the inner wall of the tube is present, having a step height (Dk) (Figs. 2 to 5), the step height (Dk) being dimensioned so that for ultrasonic radiation of the "V"-shaped path extinguishing interference occurs between the radiation (22a) reflected at said half component (X) on the one hand and the radiation (22b) reflected at the remaining half component (Y) of this reflection region on the other hand.

2. Flow meter according to Claim 1, characterized in that at least one of the half components (X, Y) of the reflection region is split up, on its own account, into individual surface components ($X_1$, $X_2$) (Fig. 3, Fig. 5).

### Revendications

1. Débitmètre à ultrasons, comportant un tube de mesure (1) parcouru par un gaz/un liquide et comportant des transducteurs d'émission/réception des ultrasons (11, 12), qui, pour un trajet (21) en forme de "W" des ultrasons avec des réflexions multiples prévues dans le tube de mesure (1), sont disposés, à une distance donnée l'un de l'autre, sur une même paroi latérale (5) du tube de mesure (1),
caractérisé par le fait
que pour réduire/éliminer le signal parasite d'un trajet parasite des ultrasons en forme de "V", qui apparaît de façon connue dans le tube de mesure (1), à l'intérieur du tube, sur la paroi (4) de ce dernier, qui est située à l'opposé de la paroi (5) du tube, qui est équipée des transducteurs (11, 12), et que rencontre une réflexion d'un trajet en forme de V, il est prévu, dans la zone de réflexion du trajet en forme de V, un bossage/renfoncement de la paroi intérieure du tube, qui s'étend sur la moitié de cette zone de réflexion et possède une hauteur d'étagement (Dk) (figures 2 à 5), la hauteur d'étagement (Dk) étant dimensionnée de manière que pour le rayonnement ultrasonore du trajet en forme de "V", il apparaît une interférence d'extinction entre, d'une part, le rayonnement (22a) réfléchi sur ladite moitié (X) de la zone de réflexion, et, d'autre part, le rayonnement réfléchi sur l'autre moitié (Y) de cette zone de réflexion.

2. Débitmètre suivant la revendication 1, caractérisé par le fait qu'au moins l'une des moitiés (X, Y) de la zone de réflexion est divisée, en soi, en éléments de surface individuels (X₁, X₂) (figure 3, figure 5).

FIG 1

FIG 2a

FIG 3a

FIG 2b

FIG 3b

FIG 4a

FIG 5a

FIG 4b

FIG 5b

7